# EUROPÄISCHE PATENTSCHRIFT

(11) **EP 3 511 695 B1**
(45) Veröffentlichungstag und Bekanntmachung des Hinweises auf die Patenterteilung: **28.12.2022**
(21) Anmeldenummer: 19156106.7
(22) Anmeldetag: 01.11.2016
(51) Int. Cl.: G01N 17/00, F25B 40/02, F25B 40/00, F25B 41/20, F25B 49/02

(54) **PRÜFKAMMER**
TEST CHAMBER
CHAMBRE D'ESSAI

(43) Veröffentlichungstag der Anmeldung: 17.07.2019
(62) Teilanmeldung aus: 16196746.8
(73) Patentinhaber: Weiss Technik GmbH, 35447 Reiskirchen (DE)
(72) Erfinder: HAACK, Christian, 35037 Marburg (DE); TEICHMANN, Johannes, 72351 Geislingen (DE)
(74) Vertreter: advotec.

(56) Entgegenhaltungen:
- EP-A2- 0 344 397
- WO-A2-2006/062860

## Beschreibung

Die Erfindung betrifft eine Prüfkammer zur Konditionierung von Luft, umfassend einen gegenüber einer Umgebung verschließbaren und temperaturisolierten Prüfraum zur Aufnahme von Prüfgut, und eine Temperiervorrichtung zur Temperierung des Prüfraums, wobei die Temperiervorrichtung eine Kühleinrichtung mit einem Kühlkreislauf mit einem Kältemittel, einem Wärmeübertrager, einem Verdichter, einem Kondensator und einem Expansionsorgan aufweist.

Derartige Prüfkammern werden regelmäßig zur Überprüfung von physikalischen und/oder chemischen Eigenschaften von Gegenständen, insbesondere Vorrichtungen eingesetzt. So sind Temperaturprüfschränke oder Klimaprüfschränke bekannt, innerhalb derer Temperaturen in einem Bereich von -50 °C bis +180 °C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Derartige Prüfkammern sind regelmäßig bzw. teilweise als ein mobiles Gerät ausgebildet, welches lediglich mit erforderlichen Versorgungsleitungen mit einem Gebäude verbunden ist und alle zur Temperierung und Klimatisierung erforderlichen Baugruppen umfasst. Eine Temperierung eines das zu prüfende Prüfgut aufnehmenden Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal bzw. den Prüfraum durchströmenden Luft angeordnet sind. Dabei saugt ein Lüfter bzw. ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfintervalls kann dann beispielsweise eine Temperatur zwischen einem Temperaturmaximum und einem Temperaturminimum der Prüfkammer wiederholt wechseln.

Das im Kühlkreislauf zirkulierende Kältemittel muss dabei so beschaffen sein, dass es in dem Kühlkreislauf innerhalb der vorgenannten Temperaturdifferenz verwendbar ist. Infolge gesetzlicher Bestimmungen darf das Kältemittel nicht wesentlich zum Ozonabbau in der Atmosphäre oder der globalen Erwärmung beitragen. So können im Wesentlichen keine fluorierten Gase oder chlorierten Stoffe als Kältemittel eingesetzt werden, weshalb natürliche Kältemittel bzw. Gase in Frage kommen. Darüber hinaus sollte das Kältemittel nicht brennbar sein, um unter anderem eine Befüllung, einen Versand und einen Betrieb der Prüfkammer nicht aufgrund eventuell einzuhaltender Sicherheitsvorschriften zu erschweren. Auch verteuert sich die Herstellung eines Kühlkreislaufs durch die Verwendung eines brennbaren Kältemittels infolge der dadurch erforderlichen konstruktiven Maßnahmen. Unter Brennbarkeit wird hier die Eigenschaft des Kältemittels verstanden, mit Umgebungssauerstoff unter Freisetzung von Wärme zu reagieren. Ein Kältemittel ist insbesondere dann brennbar, wenn es in die Brandklasse C nach der europäischen Norm EN2 bzw. der DIN 378 Klassen A2, A2L und A3 fällt.

Darüber hinaus sollte ein Kältemittel ein relativ geringes CO₂-Äquivalent aufweisen, das heißt ein relatives Treibhauspotential oder auch Global Warming Potential (GWP) sollte möglichst gering sein, um eine indirekte Schädigung der Umwelt durch das Kältemittel bei Freisetzung zu vermeiden. Das GWP gibt an, wieviel eine festgelegte Masse eines Treibhausgases zur globalen Erwärmung beiträgt, wobei als Vergleichswert Kohlendioxid dient. Der Wert beschreibt die mittlere Erwärmungswirkung über einen bestimmten Zeitraum, wobei hier zur Vergleichbarkeit 20 Jahre festgelegt werden. Zur Definition des relativen CO₂-Äquivalents bzw. GWPs wird auf den fünften Sachstandsbericht des Intergovernmental Panel on Climate Change (IPCC), Assessment Report,

Chapter8 verwiesen. Nachteilig bei Kältemitteln mit geringem GWP, beispielsweise < 2500, ist, dass diese Kältemittel in den für eine Prüfkammer relevanten Temperaturbereichen eine teilweise deutlich verringerte Kälteleistung im Vergleich zu Kältemitteln mit vergleichsweise größerem GWP aufweisen.

EP0344397 A2 offenbart eine Prüfkammer zur Konditionierung von Luft, umfassend einen gegenüber einer Umgebung verschließbaren und temperaturisolierten Prüfraum zur Aufnahme von Prüfgut, und eine Temperiervorrichtung zur Temperierung des Prüfraums, wobei die Temperiervorrichtung eine Kühleinrichtung mit einem Kühlkreislauf mit einem Kältemittel, einem Wärmeübertrager, einem Verdichter, einem Kondensator und einem Expansionsorgan aufweist, wobei der Kühlkreislauf einen Bypass aufweist, der in Strömungsrichtung nachfolgend dem Kondensator und vor dem Wärmeübertrager angeschlossen ist, das Expansionsorgan und den Wärmeübertrager überbrückt und in Strömungsrichtung vor dem Verdichter angeschlossen ist.

Die WO 2006/062860 A2 beschreibt eine Kühleinrichtung mit einem Kühlkreislauf und einem internen Wärmeübertrager, der nach einem Kondensator und vor einem Expansionsventil an einer Hochdruckseite des Kühlkreislaufs zur Unterkühlung eines Kältemittels angeschlossen ist. Weiter ist ein Bypass mit einem weiteren Expansionsventil vorgesehen, über das Kältemittel durch den internen Wärmeübertrager zu einem Kompressor zurückgeführt werden kann. Das Expansionsventil kann regelbar ausgebildet sein, so dass mit dem internen Wärmetauscher und dem Bypass eine regelbare interne Ergänzungskühlung ausgebildet ist. Weiter kann nachfolgend einem Verdampfer auf einer Niederdruckseite über eine Leitung des Kühlkreislaufs eine Unterkühlung des Kältemittels in dem internen Wärmeübertrager erfolgen.

Der vorliegenden Erfindung liegt daher die Aufgabe zugrunde, eine Prüfkammer vorzuschlagen, mit der Temperaturen von 30°C bis +180 °C erzielbar sind, wobei die Prüfkammer mit umweltfreundlichem Kältemittel betreibbar sein soll.

Diese Aufgabe wird durch eine Prüfkammer mit den Merkmalen des Anspruchs 1 gelöst.

Bei der erfindungsgemäßen Prüfkammer wird durch eine Temperaturisolierung von Seitenwänden, Bodenwänden und Deckenwänden ein Wärmeaustausch mit einer Umgebung des Prüfraums weitgehend vermieden. Der Wärmeübertrager ist an den Kühlkreislauf angeschlossen bzw. in diesen integriert, so dass das im Kühlkreislauf zirkulierende Kältemittel durch den Wärmeübertrager strömt. Der Wärmeübertrager des Kühlkreislaufs kann innerhalb des Prüfraums bzw. in einem Luftbehandlungsraum des Prüfraums angeordnet sein oder alternativ auch an einen weiteren Kühlkreislauf der Kühleinrichtung gekoppelt sein, wenn die Kühleinrichtung zwei kaskadierte Kühlkreisläufe aufweist. Der Wärmeübertrager dient dann als ein Kondensator für den weiteren Kühlkreislauf. Die Kühleinrichtung weist weiter den Verdichter, welcher beispielsweise ein Kompressor sein kann, sowie den in Strömungsrichtung des Kältemittels dem Verdichter nachfolgend angeordneten Kondensator für das verdichtete Kältemittel auf. Das verdichtete Kältemittel, welches nach der Verdichtung unter einem hohen Druck steht und im Wesentlichen gasförmig vorliegt, kondensiert im Kondensator und liegt dann im Wesentlichen in einem flüssigen Aggregatzustand vor. Das flüssige Kältemittel strömt weiter über das Expansionsorgan, wobei es durch Expansion infolge eines Druckabfalls wiederum gasförmig wird. Dabei durchströmt es den Wärmeübertrager, der dadurch gekühlt wird. Nachfolgend wird das gasförmige Kältemittel wieder vom Verdichter angesaugt und verdichtet. Unter einem Expansionsorgan wird zumindest ein Expansionsventil, Drosselorgan, Drosselventil oder eine andere, geeignete Verengung einer Fluidleitung verstanden.

Bei der vorliegenden Erfindung ist vorgesehen, den internen Wärmeübertrager auf der Hochdruckseite des Kühlkreislaufs in einer Strömungsrichtung vor dem Expansionsorgan und nachfolgend dem Kondensator anzuschließen bzw. in den Kühlkreislauf zu integrieren. Das von dem Kondensator verflüssigte Kältemittel strömt demnach von dem Kondensator durch den internen Wärmeübertrager zu dem Expansionsorgan. Dabei kann das Kältemittel mittels des internen Wärmeübertragers gekühlt werden. Dies erfolgt erfindungsgemäß dadurch, dass der interne Wärmeübertrager mit einer regelbaren internen Ergänzungskühlung des Kühlkreislaufs gekoppelt ist.

Unter einer internen Ergänzungskühlung wird eine Ergänzungskühlung verstanden, bei der durch eine im Kühlkreislauf integrierte Vorrichtung Energie bzw. Kälteleistung des Kühlkreislaufs zur Kühlung des internen Wärmeübertragers genutzt wird. Bei der erfindugsgemäßen internen Ergänzungskühlung des Kühlkreislaufs wird im Unterschied zur externen Ergänzungskühlung folglich dem Kühlkreislauf keine zusätzliche Energie, abgesehen vom Verdichter, Wärmeübertrager und Kondensator, extern zugeführt.

Erfindugsgemäß ist in dem Kühlkreislauf ein erster Bypass mit zumindest einem regelbaren zweiten Expansionsorgan ausgebildet, wobei der erste Bypass in einer Strömungsrichtung vor dem internen Wärmeübertrager und nachfolgend dem Kondensator an den Kühlreislauf angeschlossen ist, wobei der erste Bypass als regelbare interne Ergänzungskühlung ausbildet. Das Kältemittel kann dann zumindest teilweise in Strömungsrichtung vor dem Expansionsorgan in den ersten Bypass umgeleitet werden, wobei mittels des zweiten Expansionsorgans eine Entspannung und damit Abkühlung des Kältemittels erfolgt. Dieses Kältemittel ist dann zur Kühlung des vor dem Expansionsorgan anstehenden Kältemittels nutzbar. Die so ausgebildete interne Ergänzungskühlung kann insbesondere über das zweite Expansionsorgan geregelt werden, so dass die interne Ergänzungskühlung stets an die Betriebserfordernisse der Kühleinrichtung anpassbar ist.

Erfindungsgemäß ist eine Niederdruckseite des internen Wärmeübertragers an dem ersten Bypass in einer Strömungsrichtung nachfolgend dem regelbaren zweiten Expansionsorgan angeschlossen, wobei von dem regelbaren zweiten Expansionsorgan dem internen Wärmeübertrager Kältemittel zugeführt werden kann, wobei der interne Wärmeübertrager an eine Niederdruckseite des Kühlkreislaufs in einer Strömungsrichtung vor dem Verdichter und nachfolgend dem Wärmeübertrager angeschlossen ist, wobei von der Niederdruckseite des internen Wärmeübertragers Kältemittel dem Verdichter zugeführt werden kann. Das von dem Wärmeübertrager erwärmte Kältemittel wird folglich nicht direkt durch den internen Wärmeübertrager geleitet, sondern alleine das über den ersten Bypass gekühlte Kältemittel. Nach dem das über das zweite Expansionsorgan gekühlte bzw. in seinem Temperaturniveau abgesenkte Kältemittel durch den internen Wärmeübertrager hindurchgeleitet ist, kann es von dort in einen von den Wärmeübertrager zum Verdichter führenden Leitungsabschnitt des Kühlkreislaufs eingeleitet werden. Eine Kühlleistung des internen Wärmeübertragers wird dadurch noch genauer regelbar. Erfindungsgemäß ist in dem Kühlkreislauf ein weiterer Bypass mit zumindest einem weiteren Expansionsorgan ausgebildet .

Der weitere Bypass kann ergänzend mit einem einstellbaren oder regelbaren Ventil, beispielsweise einem Magnetventil ausgestattet sein. Durch die Verbindung von Hochdruckseite und Niederdruckseite über das weitere Expansionsorgan kann sichergestellt werden, dass bei einem Anlagenstillstand das so verdichtete und gasförmige Kältemittel von der Hochdruckseite allmählich auf die Niederdruckseite des Kühlkreislaufs strömt. So wird auch bei geschlossenem Expansionsorgan sichergestellt, dass ein allmählicher Druckausgleich zwischen der Hochdruckseite und der Niederdruckseite erfolgt. Ein Querschnitt des weiteren Expansionsorgans kann dabei so bemessen sein, dass ein Überströmen des Kältemittels von der Hochdruckseite zu der Niederdruckseite einen normalen Betrieb der Kühleinrichtung nur unwesentlich beeinflusst. Gleichwohl kann vorgesehen sein, dass vor dem Verdichter befindliches gasförmiges Kältemittel durch Zudosieren von den flüssigem Kältemittel über den weiteren Bypass gekühlt wird.

Mittels der Temperiervorrichtung kann eine Temperatur in einem Temperaturbereich von -60 °C bis +180 °C, vorzugsweise -80 °C bis +180 °C, innerhalb des Prüfraums ausgebildet werden. Zumindest ist aber ein Temperaturbereich von -30 °C bis +180 °C, vorzugsweise -42 °C bis +180 °C vorgesehen.

Möglich ist, dass dann mittels der Temperiervorrichtung eine Temperatur in einem Temperaturbereich von > +60 °C bis +180 °C innerhalb des Prüfraums reduziert werden kann. Das Kältemittel wird im Wärmeübertrager durch die vergleichsweise hohe Temperatur im Prüfraum stark erwärmt, weshalb der Kühlkreislauf hinsichtlich seiner Konstruktion, zumindest auf einer Niederdruckseite des Kühlkreislaufs, an ein in diesem Temperaturbereich erwärmtes Kältemittel technisch angepasst sein kann. Ein derart erwärmtes Kältemittel ist sonst nicht mehr auf der Hochdruckseite des Kühlkreislaufs optimal nutzbar.

Das Kältemittel kann ein relatives CO₂-Äquivalent, bezogen auf 20 Jahre von < 2500, bevorzugt < 500, besonders bevorzugt < 100 aufweisen, und damit nur wenig umweltschädigend sein. Weiter kann das Kältemittel auch nicht brennbar sein, wodurch es möglich wird, die Prüfkammer und insbesondere den Kühlkreislauf kostengünstiger auszubilden, da keine besonderen Sicherheitsvorkehrungen hinsichtlich Brennbarkeit des Kältemittels zu beachten sind. Das Kältemittel kann dann zumindest nicht der Brandklasse C und/oder der Kältemittelsicherheitsgruppe A1 zugeordnet werden. Darüber hinaus wird ein Versand bzw. ein Transport der Prüfkammer vereinfacht, da die Prüfkammer bereits vor einem Transport, unabhängig von der Transportart, mit dem Kältemittel befüllt werden kann. Bei brennbarem Kältemittel ist gegebenenfalls erst eine Befüllung im Rahmen einer Inbetriebnahme am Aufstellort möglich. Weiter ist eine Verwendung der nicht brennbaren Kältemittel bei im Prüfraum vorhandenen Zündquellen möglich. Sensoren zur Detektion einer entzündbaren Atmosphäre im Bereich des Wärmeübertragers im Prüfraums sind dann nicht erforderlich. Derartige Sensoren sind regelmäßig nicht temperaturstabil.

In einer Ausführungsform der Prüfkammer kann der Wärmeübertrager in dem Prüfraum angeordnet sein. Auch kann der Wärmeübertrager dann in einem Luftbehandlungsraum des Prüfraums angeordnet sein, so dass von einem Lüfter umgewälzte Luft mit dem Wärmeübertrager in Kontakt gelangen kann. So wird es möglich, eine umgewälzte Luftmenge des Prüfraums mittels der Kühleinrichtung über den Wärmeübertrager im Prüfraum direkt abzukühlen. Die Prüfkammer kann dann den Kühlkreislauf als einen alleinigen, einzigen Kühlkreislauf aufweisen. Der Kühlkreislauf ist dann direkt an den Prüfraum angeschlossen.

In einer weiteren Ausführungsform der Prüfkammer kann der Wärmeübertrager einen Kaskaden-Wärmeübertrager für einen weiteren Kühlkreislauf der Kühleinrichtung ausbilden. Demnach kann die Prüfkammer dann zumindest zwei Kühlkreisläufe aufweisen, wobei der Kühlkreislauf dann eine erste Stufe der Kühleinrichtung und ein weiterer Kühlkreislauf, der dann direkt an den Prüfraum angeschlossen ist, eine zweite Stufe der Kühleinrichtung ausbildet. Der Kaskaden-Wärmeübertrager bzw. der Wärmeübertrager dient dann auch als ein Kondensator für den weiteren Kühlkreislauf. Bei dieser Ausführungsform einer Prüfkammer wird es dann möglich, besonders niedrige Temperaturen in dem Prüfraum auszubilden.

Der weitere Kühlkreislauf kann ein weiteres Kältemittel, einen weiteren Verdichter, einen weiteren Wärmeübertrager, einen weiteren Kondensator, und ein weiteres Expansionsorgan aufweisen, wobei der weitere Wärmeübertrager in dem Prüfraum angeordnet sein kann, wobei der weitere Kühlkreislauf mittels des weiteren Kondensators mit dem Kaskaden-Wärmeübertrager des Kühlkreislaufs gekoppelt sein kann. Die Kühleinrichtung weist dann zwei in Reihe geschaltete Kreisläufe auf, die eine sogenannte Kältekaskade ausbilden.

Die Temperiervorrichtung kann eine Heizeinrichtung mit einer Heizung und einem Heiz-Wärmeübertrager in dem Prüfraum aufweisen. Die Heizeinrichtung kann beispielsweise eine elektrische Widerstandsheizung sein, die den Heiz-Wärmeübertrager beheizt, derart, dass über den Heiz-Wärmeübertrager eine Temperaturerhöhung in dem Prüfraum ermöglicht wird. Wenn der Wärmeübertrager und der Heiz-Wärmeübertrager mittels einer Regeleinrichtung zur Kühlung oder Erwärmung der im Prüfraum umgewälzten Luft gezielt gesteuert werden können, kann mittels der Temperiervorrichtung dann innerhalb des Prüfraums eine Temperatur in den vorstehend angegebenen Temperaturbereichen ausgebildet werden. Dabei kann unabhängig vom Prüfgut bzw. eines Betriebszustandes des Prüfgutes eine zeitliche Temperaturkonstanz von ±1 K, vorzugsweise ±0,3 bis ±0,5 K während eines Prüfintervalls in den Prüfraum ausgebildet werden. Unter einem Prüfintervall wird hier ein Zeitabschnitt eines vollständigen Prüfzeitraums verstanden, in dem das Prüfgut einer im Wesentlichen gleichbleibenden Temperatur oder Klimabedingung ausgesetzt wird. Der Heiz-Wärmeübertrager kann zusammen mit dem Wärmeübertrager des Kühlkreislaufs derart kombiniert sein, dass ein gemeinsamer Wärmeübertragerkörper ausgebildet ist, der vom Kältemittel durchströmbar ist und der Heizelemente einer elektrischen Widerstandsheizung aufweist. Der Kondensator kann mit einer Luftkühlung oder Wasserkühlung oder einer anderen Kühlflüssigkeit ausgebildet sein. Prinzipiell kann der Kondensator mit jedem geeigneten Fluid gekühlt werden. Wesentlich ist, dass die am Kondensator anfallende Wärmelast über die Luftkühlung oder Wasserkühlung so abgeführt wird, dass das Kältemittel so kondensieren kann, dass es vollständig verflüssigt ist.

Weiter kann in dem Kühlkreislauf eine Druckausgleichseinrichtung für das Kältemittel angeordnet sein, wobei bei einer im Kühlkreislauf gleichmäßig ausgebildeten Temperatur des Kältemittels von 20 °C ein Druck von < 40 bar, vorzugsweise < 25 bar im Kühlkreislauf ausgebildet sein kann. Sofern ein weiterer Kühlkreislauf vorhanden ist, kann dieser ebenfalls eine derartige Druckausgleichseinrichtung aufweisen. Da in dem Kühlkreislauf vergleichsweise hohe Temperaturdifferenzen im Betrieb vorliegen können, ist es besonders vorteilhaft, wenn die Druckausgleichseinrichtung diese ausgleichen kann. So können sehr große Temperaturschwankungen und damit eine Volumenänderung des Kältemittels in Abhängigkeit des jeweiligen Ausdehnungskoeffizienten des Kältemittels über die Druckausgleichseinrichtung kompensiert werden. Beispielsweise kann die Druckausgleichseinrichtung ein Kältemittelreservoir sein, welches an einer Niederdruckseite des Kühlkreislaufs angeschlossen ist.

Insbesondere kann vorgesehen sein, dass die Druckausgleichseinrichtung so ausgebildet ist, dass die Temperiervorrichtung stromlos eigensicher ist, d. h. dass keine Stillstandskühlung des Kältemittels erforderlich ist. Auch ist es möglich, den Kühlkreislauf bereits vor einem Transport der Prüfkammer vollständig und betriebsfertig zu befüllen.

Weiter kann der interne Wärmeübertrager mit einer regelbaren externen Ergänzungskühlung gekoppelt sein. Unter einer zusätzlichen externen Ergänzungskühlung wird eine Ergänzungskühlung verstanden, bei der von einer vom Kühlkreislauf unabhängigen Vorrichtung Energie zur Kühlung des internen Wärmeübertragers aufgebracht wird. Die regelbare externe Ergänzungskühlung kann als eine Rückeinspeisung einer Tiefkühlstufe der Kühleinrichtung oder als eine externe Kühlwasserleitung ausgebildet sein, wobei die Rückeinspeisung oder die Kühlwasserleitung an den internen Wärmeübertrager angeschlossen sein kann. In einer einfachen Ausführungsform ist dann die externe Ergänzungskühlung eine lediglich an den internen Wärmeübertrager gekoppelte Kühlwasserleitung, die gegebenenfalls von einer weiteren, dann externen Kühlvorrichtung gekühlt wird. Sofern die Prüfkammer über zumindest zwei Kühlkreisläufe verfügt, kann dann eine zweite Stufe bzw. die Tiefkühlstufe der Kühleinrichtung bzw. ein weiterer Kühlkreislauf der Kühleinrichtung durch den internen Wärmeübertrager hindurchgeleitet bzw. an diesen angeschlossen sein.

Alternativ kann die regelbare externe Ergänzungskühlung als ein Peltierelement oder ein Wärmerohr ausgebildet sein. Beispielsweise kann der interne Wärmeübertrager dann aus einem Leitungsabschnitt des Kühlkreislaufs ausgebildet sein, an dem Peltierelemente oder Wärmerohre befestigt sind.

Darüber hinaus kann in dem Kühlkreislauf ein zweiter Bypass mit zumindest einem dritten Expansionsorgan ausgebildet sein, wobei der zweite Bypass das Expansionsorgan in Strömungsrichtung vor dem Kondensator und nachfolgend dem internen Wärmeübertrager überbrückt, wobei über das dritte Expansionsorgan Kältemittel so dosiert werden kann, dass eine Sauggastemperatur und/oder ein Sauggasdruck des Kältemittels auf einer Niederdruckseite des Kühlkreislaufs vor dem Verdichter geregelt werden kann. Dadurch kann unter anderem verhindert werden, dass der Verdichter bei dem es sich beispielsweise um einen Kompressor handeln kann, eventuell überhitzt und damit beschädigt wird. Folglich kann über den zweiten Bypass durch Betätigung des dritten Expansionsorgans vor dem Verdichter befindliches gasförmiges Kältemittel durch Zudosieren von noch flüssigem Kältemittel gekühlt werden. Eine Betätigung des dritten Expansionsorgans kann durch eine Steuervorrichtung erfolgen, die ihrerseits mit einem Druck und/oder Temperatursensor in dem Kühlkreislauf vor dem Verdichter gekoppelt ist. Besonders vorteilhaft ist es, wenn über den zweiten Bypass eine Sauggastemperatur von ≤ 30 °C eingestellt werden kann. Auch kann das Kältemittel so dosiert werden, dass eine Betriebsdauer des Verdichters regelbar ist. Prinzipiell ist es nachteilig, wenn der Verdichter bzw. Kompressor vielfach eingeschaltet und ausgeschaltet wird. Eine Lebensdauer eines Kompressors kann verlängert werden, wenn dieser längere Zeitabschnitte in Betrieb ist. Über den zweiten Bypass kann Kältemittel an dem Expansionsorgan oder dem Kondensator vorbeigeführt werden, um beispielsweise ein automatisches Abschalten des Kompressors zu verzögern und eine Betriebsdauer des Kompressors zu verlängern.

Der interne Wärmeübertrager kann als eine Unterkühlstrecke oder ein Wärmetauscher, insbesondere Plattenwärmetauscher ausgebildet sein. Die Unterkühlstrecke kann bereits durch zwei aneinander anliegende Leitungsabschnitte des Kühlkreislaufs ausgebildet sein.

Das Expansionsorgan kann ein Drosselorgan und ein Magnetventil aufweisen, wobei über das Drosselorgan und das Magnetventil Kältemittel dosiert werden kann. Das Drosselorgan kann ein einstellbares Ventil oder eine Kapillare sein, über das dann mittels des Magnetventils Kältemittel geleitet wird. Das Magnetventil kann seinerseits mittels einer Regeleinrichtung betätigt werden.

Weiter kann die Temperiervorrichtung eine Regeleinrichtung mit zumindest einem Drucksensor und/oder zumindest einem Temperatursensor in dem Kühlkreislauf umfassen, wobei Magnetventile mittels der Regeleinrichtung in Abhängigkeit einer gemessenen Temperatur bzw. eines Drucks betätigt werden können. Die Regeleinrichtung kann Mittel zur Datenverarbeitung umfassen, die Datensätze von Sensoren verarbeiten und die Magnetventile ansteuern. Eine Regelung einer Funktion der Kühleinrichtung kann dann auch, beispielsweise über ein entsprechendes Computerprogramm, an das verwendete Kältemittel angepasst sein. Weiter kann die Regeleinrichtung eine Betriebsstörung signalisieren und gegebenenfalls eine Abschaltung der Prüfkammer veranlassen, um die Prüfkammer oder das Prüfgut vor einer Beschädigung durch kritische oder unerwünschte Betriebszustände der Prüfkammer zu schützen.

Nachfolgend werden Vergleichsbeispiele, die nicht unter den Anspruchsgegenstand fallen, und eine Kühleinrichtung einer erfindungsgemäßen Prüfkammer unter Bezugnahme auf die beigefügten Zeichnungen näher erläutert.

Es zeigen:
- **Fig. 1**: eine schematische Darstellung eines ersten Vergleichbeispiels einer Kühleinrichtung abweichend von der Erfindung;
- **Fig. 2**: eine schematische Darstellung eines zweiten Vergleichbeispiels einer Kühleinrichtung abweichend von der Erfindung;
- **Fig. 3**: eine schematische Darstellung einer Kühleinrichtung einer erfindungsgemäßen Prüfkammer.

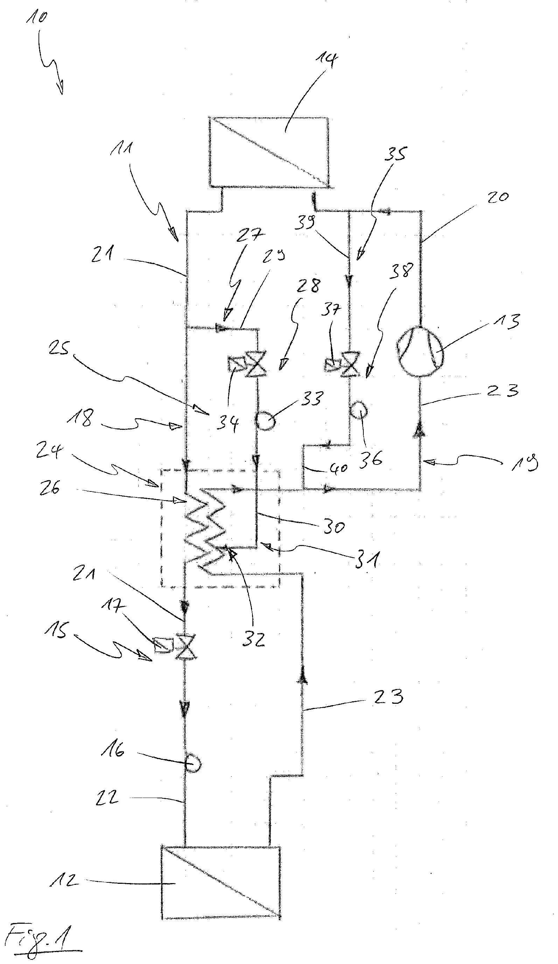

Die **Fig. 1** zeigt eine schematische Darstellung einer Kühleinrichtung 10 mit einem Kühlkreislauf 11, innerhalb dem ein Kältemittel zirkulieren kann. Das Kältemittel weist ein relatives CO₂-Äquivalent, bezogen auf 20 Jahre von < 2500 auf. Weiter umfasst die Kühleinrichtung 10 einen Wärmeübertrager 12, der in einem hier nicht dargestellten Prüfraum angeordnet oder an einen hier nicht dargestellten weiteren Kühlkreislauf angeschlossen ist, einen Kompressor 13, einen Kondensator 14 und ein Expansionsorgan 15. Das Expansionsorgan 15 ist aus einem Drosselorgan 16 und einem Magnetventil 17 ausgebildet. Der Kühlkreislauf 11 weist eine Hochdruckseite 18, die in Strömungsrichtung des Kältemittels vom Kompressor 13 zum Expansionsorgan 15 verläuft, sowie eine Niederdruckseite 19, die vom Expansionsorgan 15 zum Kompressor 13 verläuft, auf. In einem Rohrabschnitt 20 vom Kompressor 13 zum Kondensator 14 ist das Kältemittel gasförmig und weist eine vergleichsweise hohe Temperatur auf. Das von dem Kompressor 13 verdichtete Kältemittel fließt in dem Kühlkreislauf 11 zu dem Kondensator 14, wobei das gasförmige Kältemittel in dem Kondensator 14 verflüssigt wird. In Strömungsrichtung des Kältemittels folgt in dem Kühlkreislauf 11 nach dem Kondensator 14 der Wärmeübertrager 12, wobei in einem Rohrabschnitt 21 des Kühlkreislaufs 11 zwischen dem Kondensator 14 und dem Expansionsorgan 15 das Kältemittel demnach im flüssigen Aggregatzustand vorliegt. Durch eine Expansion des Kältemittels nachfolgend dem Expansionsorgan 15 erfolgt eine Kühlung des Wärmeübertragers 12, wobei das Kältemittel dann in einem Rohrabschnitt 22 zwischen dem Expansionsorgan 15 und dem Wärmeübertrager 12 in den gasförmigen Aggregatzustand übergeht und über einen Rohrabschnitt 23 vom Wärmeübertrager 12 zu dem Kompressor 13 geleitet wird.

In dem Kühlkreislauf 11 ist weiter ein interner Wärmeübertrager 24 in dem Rohrabschnitt 21 auf der Hochdruckseite 18 des Kühlkreislaufs 11 angeschlossen. Der interne Wärmeübertrager 24 ist mit einer regelbaren internen Ergänzungskühlung 25 gekoppelt. Weiter ist der interne Wärmeübertrager 24 als eine Unterkühlstrecke 26 ausgebildet. So ist der Rohrabschnitt 23 abschnittsweise an den Rohrabschnitt 21 herangeführt, derart, dass es zu einem Wärmeübergang zwischen den Rohrabschnitten 21 bzw. 23 kommen kann.

Die regelbare interne Ergänzungskühlung 25 ist durch einen ersten Bypass 27 mit einem regelbaren zweiten Expansionsorgan 28 ausgebildet, wobei der erste Bypass 27 mit einem Rohrabschnitt 29 von dem Rohrabschnitt 21 abzweigt und nachfolgend dem zweiten Expansionsorgan 28 mit einem Rohrabschnitt 30 eine Rückeinspritzeinrichtung 31 für das Kältemittel ausbildet. Insbesondere ist der Rohrabschnitt 30 mittels eines Rückeinspritzventils 32 an den Rohrabschnitt 23 im Bereich der Unterkühlstrecke 26 angeschlossen. Das Rückeinspritzventil 32 ist dabei in der Strömungsrichtung des Kältemittels nach 1/3 einer Länge der Unterkühlstrecke 26 an diese angeschlossen. Eine Regelung der internen Ergänzungskühlung 25 wird dadurch möglich, dass das zweite Expansionsorgan 28 ein Drosselorgan 33 und ein Magnetventil 34 aufweist, mittels dem Kältemittel in seinem Temperaturniveau abgesenkt und in die Unterkühlstrecke 26 bzw. den diesbezüglichen Rohrabschnitt 23 dem dort strömenden, vergleichsweise warmen Kältemittel zudosiert werden kann. Dadurch erfolgt eine Abkühlung des in dem Rohrabschnitt 21 vor dem Expansionsorgan 15 in der Unterkühlstrecke 36 befindlichen Kältemittels. Durch diese sogenannte Unterkühlung des verflüssigten Kältemittels auf der Hochdruckseite 18 wird es möglich, eine verringerte Kälteleistung des Kältemittels im Vergleich zu Kältemitteln mit einem GWP > 2500 auszugleichen. Gleichwohl kann über die Regelung der Zumischung von Kältemittel ein gegebenenfalls schwankendes Temperaturniveau von aus dem Wärmeübertrager 12 ausströmenden Kältemittel kompensiert werden, insbesondere dann, wenn im Prüfraum Temperaturen > 60 °C ausgebildet sind.

In dem Kühlkreislauf 11 ist weiter ein zweiter Bypass 35 mit einem Drosselorgan 36 und einem Magnetventil 37, welche ein drittes Expansionsorgan 38 ausbilden, angeordnet. Rohrabschnitte 39 und 40 des zweiten Bypasses 35 überbrücken den Kompressor 13 derart, dass bei einem Stillstand des Kompressors 13 ein allmählicher Druckausgleich zwischen der Hochdruckseite 18 und der Niederdruckseite 19 über das dritte Expansionsorgan 38 erfolgt. Weiter kann eine Sauggastemperatur und/oder ein Sauggasdruck des Kältemittels auf der Niederdruckseite 19 des Kühlkreislaufs 11 vor dem Kompressor 13 über das Magnetventil 37 geregelt werden.

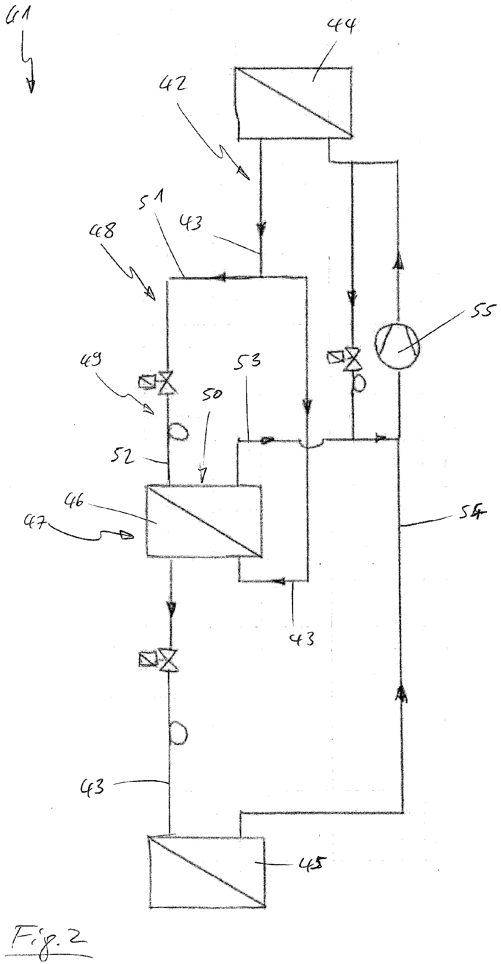

Die **Fig. 2** zeigt eine Kühleinrichtung 41, die im Unterschied zur Kühleinrichtung aus **Fig. 1** einen Kühlkreislauf 42 mit einem Rohrabschnitt 43 zwischen einem Kondensator 44 und einem Wärmeübertrager 45 aufweist, in den ein als Wärmetauscher 46 ausgebildeter interner Wärmeübertrager 47 eingesetzt ist. Ein erster Bypass 48 mit einem zweiten Expansionsorgan 42 zweigt hier vor dem Rohrabschnitt 43 noch vor dem Wärmetauscher 46 ab und ist direkt an den Wärmetauscher 46 an eine Niederdruckseite 50 des internen Wärmeübertragers 47 angeschlossen. Der erste Bypass ist aus Rohrabschnitten 51 und 52 ausgebildet, wobei ein Rohrabschnitt 43 von der Niederdruckseite 50 in einen Rohrabschnitt 54 in Strömungsrichtung vor einem Kompressor 55 mündet.

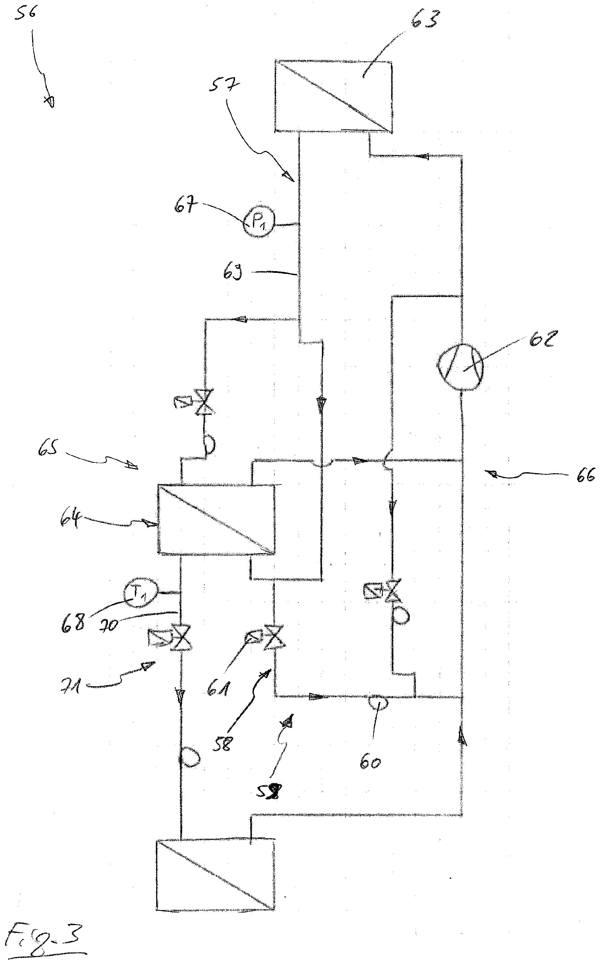

Die **Fig. 3** zeigt eine Kühleinrichtung 56 mit einem Kühlkreislauf 57, wobei im Unterschied zu der Kühleinrichtung aus **Fig. 2** hier ein weiterer Bypass 58 mit einem weiteren Expansionsorgan 59 vorgesehen ist. Das weitere Expansionsorgan 59 weist ebenfalls ein Drosselorgan 60 und ein Magnetventil 61 auf. Der Kühlkreislauf 57 weist einen Kompressor 62 sowie eine Hochdruckseite 65 und eine Niederdruckseite 66 auf.

Der weitere Bypass 58 kann so zur Regelung einer Sauggastemperatur vor dem Kompressor 62 genutzt werden. Weiter sind ein Drucksensor 67 und ein Temperatursensor 68 in dem Kühlkreislauf 57 vorgesehen. Mit dem Drucksensor 67 kann ein Kältemitteldruck in einem Rohrabschnitt 69 nach dem Kondensator und mit dem Temperatursensor 68 eine Kältemitteltemperatur in einem Rohrabschnitt 70 unmittelbar vor einem Expansionsorgan 71 gemessen werden. Insbesondere ist vorgesehen, mittels einer hier nicht näher dargestellten Regeleinrichtung eine Temperatur des Kältemittels in Abhängigkeit eines Drucks zu regeln.

## Patentansprüche

1. Prüfkammer zur Konditionierung von Luft, umfassend einen gegenüber einer Umgebung verschließbaren und temperaturisolierten Prüfraum zur Aufnahme von Prüfgut, und eine Temperiervorrichtung zur Temperierung des Prüfraums, wobei die Temperiervorrichtung eine Kühleinrichtung (56) mit einem Kühlkreislauf (57) mit einem Kältemittel, einem Wärmeübertrager (45), einem Verdichter (62), einem Kondensator (63) und einem Expansionsorgan (71) aufweist, wobei mittels der Temperiervorrichtung eine Temperatur in einem Temperaturbereich von -30 °C bis +180 °C innerhalb des Prüfraums ausbildbar ist, wobei der Kühlkreislauf einen internen Wärmeübertrager (64) aufweist, wobei der interne Wärmeübertrager an einer Hochdruckseite (65) des Kühlkreislaufs in einer Strömungsrichtung vor dem Expansionsorgan und nachfolgend dem Kondensator angeschlossen ist, wobei der interne Wärmeübertrager an eine Niederdruckseite (66) des Kühlkreislaufs in einer Strömungsrichtung vor dem Verdichter und nachfolgend dem Wärmeübertrager angeschlossen ist, wobei das Kältemittel mittels des internen Wärmeübertragers kühlbar ist, wobei der interne Wärmeübertrager mit einer regelbaren internen Ergänzungskühlung (25) des Kühlkreislaufs gekoppelt ist, wobei in dem Kühlkreislauf ein erster Bypass (48) mit zumindest einem regelbaren zweiten Expansionsorgan (49) ausgebildet ist, wobei der erste Bypass in einer Strömungsrichtung vor dem internen Wärmeübertrager und nachfolgend dem Kondensator an den Kühlkreislauf angeschlossen ist, wobei der erste Bypass als die regelbare interne Ergänzungskühlung ausgebildet ist, wobei eine Niederdruckseite (50) des internen Wärmeübertragers an dem ersten Bypass in einer Strömungsrichtung nachfolgend dem regelbaren zweiten Expansionsorgan angeschlossen ist, wobei von dem regelbaren zweiten Expansionsorgan dem internen Wärmeübertrager das Kältemittel zuführbar ist, wobei von der Niederdruckseite des internen Wärmeübertragers das Kältemittel dem Verdichter zuführbar ist, wobei in dem Kühlkreislauf ein weiterer Bypass (58) mit zumindest einem weiteren Expansionsorgan (59) ausgebildet ist, wobei der weitere Bypass die Hochdruckseite in Strömungsrichtung nachfolgend dem Kondensator und vor dem internen Wärmeübertrager mit der Niederdruckseite verbindet, derart, dass eine Sauggastemperatur und/oder ein Sauggasdruck des Kältemittels auf der Niederdruckseite des Kühlkreislaufs vor dem Verdichter regelbar ist, und/oder dass eine Druckdifferenz zwischen der Hochdruckseite und der Niederdruckseite des Kühlkreislaufs ausgleichbar ist.

2. Prüfkammer nach Anspruch 1,
**dadurch gekennzeichnet,**
**dass** mittels der Temperiervorrichtung eine Temperatur in einem Temperaturbereich von -50 °C bis +180 °C, vorzugsweise -80 °C bis +180 °C, innerhalb des Prüfraums ausbildbar ist.

3. Prüfkammer nach Anspruch 1 oder 2,
**dadurch gekennzeichnet,**
**dass** mittels der Temperiervorrichtung eine Temperatur in einem Temperaturbereich von > +60 °C bis +180 °C innerhalb des Prüfraums reduzierbar ist.

4. Prüfkammer nach einem der vorangehenden Ansprüche,
**dadurch gekennzeichnet,**
**dass** das Kältemittel ein relatives CO₂-Äquivalent, definiert als Global Warming Potential gemäß dem fünften Sachstandsbericht des Intergovernmental Panel on Climate Change (IPCC), Assessment Report, Chapter 8, bezogen auf 20 Jahre, von < 2500, bevorzugt < 500, besonders bevorzugt < 100, aufweist, wobei das Kältemittel nicht brennbar ist.

5. Prüfkammer nach einem der vorangehenden Ansprüche,
**dadurch gekennzeichnet,**
**dass** der Wärmeübertrager (45) in dem Prüfraum angeordnet ist.

6. Prüfkammer nach einem der Ansprüche 1 bis 4,
**dadurch gekennzeichnet,**
**dass** der Wärmeübertrager (45) einen Kaskaden-Wärmeübertrager für einen weiteren Kühlkreislauf der Kühleinrichtung (56) ausbildet.

7. Prüfkammer nach Anspruch 6,
**dadurch gekennzeichnet,**
**dass** der weitere Kühlkreislauf ein weiteres Kältemittel, einen weiteren Verdichter, einen weiteren Wärmeübertrager, einen weiteren Kondensator, und ein weiteres Expansionsorgan aufweist, wobei der weitere Wärmeübertrager in dem Prüfraum angeordnet ist, wobei der weitere Kühlkreislauf mittels des weiteren Kondensators mit dem Kaskaden-Wärmeübertrager des Kühlkreislaufs (57) gekoppelt ist.

8. Prüfkammer nach einem der vorangehenden Ansprüche,
**dadurch gekennzeichnet,**
**dass** die Temperiervorrichtung eine Heizeinrichtung mit einer Heizung und einem Heiz-Wärmeübertrager in dem Prüfraum aufweist.

9. Prüfkammer nach einem der vorangehenden Ansprüche,
**dadurch gekennzeichnet,**
**dass** der Kondensator (63) mit einer Luftkühlung oder Wasserkühlung oder einer anderen Kühlflüssigkeit ausgebildet ist.

10. Prüfkammer nach einem der vorangehenden Ansprüche,
**dadurch gekennzeichnet,**
**dass** der interne Wärmeübertrager (64) mit einer regelbaren externen Ergänzungskühlung der Kühleinrichtung gekoppelt ist.

11. Prüfkammer nach Anspruch 10,
**dadurch gekennzeichnet,**
**dass** die regelbare externe Ergänzungskühlung als eine Rückeinspeisung einer Tiefkühlstufe der Kühleinrichtung (56) oder eine externe Kühlwasserleitung ausgebildet ist, wobei die Rückeinspeisung oder Kühlwasserleitung an den internen Wärmeübertrager (64) angeschlossen ist.

12. Prüfkammer nach Anspruch 10,
**dadurch gekennzeichnet,**
**dass** die regelbare externe Ergänzungskühlung als ein Peltierelement oder ein Wärmerohr ausgebildet ist.

13. Prüfkammer nach einem der vorangehenden Ansprüche,
**dadurch gekennzeichnet,**
**dass** in dem Kühlkreislauf (57) ein zweiter Bypass (35) mit zumindest einem dritten Expansionsorgan (38) ausgebildet ist, wobei der zweite Bypass das Expansionsorgan (71) in Strömungsrichtung vor dem Kondensator (63) und nachfolgend dem internen Wärmeübertrager überbrückt, wobei über das dritte Expansionsorgan Kältemittel so dosierbar ist, dass eine Sauggastemperatur und/oder ein Sauggasdruck des Kältemittels auf der Niederdruckseite (66) des Kühlkreislaufs vor dem Verdichter (62) regelbar ist.

14. Prüfkammer nach einem der vorangehenden Ansprüche,
**dadurch gekennzeichnet,**
**dass** der interne Wärmeübertrager (64) als eine Unterkühlstrecke oder ein Wärmetauscher (46), insbesondere Plattenwärmetauscher ausgebildet ist.

15. Prüfkammer nach einem der vorangehenden Ansprüche,
**dadurch gekennzeichnet,**
**dass** die Expansionsorgane (28, 38, 49, 59, 71) jeweils ein Drosselorgan (33, 36, 60) und ein Magnetventil (34, 37, 61) aufweisen, wobei über das Drosselorgan und das Magnetventil Kältemittel dosierbar ist.

16. Prüfkammer nach Anspruch 15,
**dadurch gekennzeichnet,**
**dass** die Temperiervorrichtung eine Regeleinrichtung mit zumindest einen Drucksensor (67) und/oder zumindest einen Temperatursensor (68) in dem Kühlkreislauf (57) umfasst, wobei die Magnetventile (34, 37, 61) mittels der Regeleinrichtung in Abhängigkeit einer gemessenen Temperatur bzw. eines Drucks betätigbar sind.

## Claims

1. A test chamber for conditioning air, comprising a temperatureinsulated test space sealable against an environment for receiving test materials and a temperature control device for controlling the temperature of the test space, said temperature control device comprising a cooling device (56) having a cooling cycle (57) having a refrigerant, a heat transmitter (45), a compressor (62), a condenser (63) and an expanding element (71),a temperature ranging from -30 °C to +180 °C in temperature being able to be realized within the test space by means of the temperature control device, the cooling cycle comprising an internal heat transmitter (64), the internal heat transmitter being connected to a high-pressure side (65) of the cooling cycle upstream of the expanding element and downstream of the condenser in a flow direction, the internal heat transmitter being connected to a low-pressure side (66) of the cooling cycle upstream of the compressor and downstream of the heat transmitter in a flow direction, said refrigerant being able to be cooled by means of the internal heat transmitter, the internal heat transmitter coupled to an adjustable supplementary internal refrigeration (25) of the cooling cycle, a first bypass (48) having at least one adjustable second expanding element (49) being realized in the cooling cycle, said first bypass being connected to the cooling cycle upstream of the internal heat transmitter and downstream of the condenser in a flow direction, the first bypass being realized as the adjustable internal supplementary refrigeration, the first bypass forming a back-injection device (31) for the refrigerant, a low-pressure side (50) of the internal heat transmitter being connected to the first bypass downstream of the second adjustable expanding element in a flow direction, the refrigerant being able to supplied to the internal heat transmitter from the second adjustable expanding element, the refrigerant being able to be supplied to the compressor from the low-pressure side, another bypass (58) having at least one other expanding element (59) being realized in the cooling cycle, the other bypass connecting the high-pressure side to the low-pressure side downstream of the condenser and upstream of the internal heat transmitter in the flow direction in such a manner that a suction gas temperature and/or a suction gas pressure of the refrigerant can be adjusted on the low-pressure side of the cooling cycle upstream of the compressor and/or that a difference in pressure between the high-pressure side and the low-pressure side of the cooling cycle can be compensated.

2. The test chamber according to claim 1,
**characterized in that**
a temperature ranging from -50 °C to +180 °C, preferably from -80 °C to+180 °C, in temperature, can be realized within the test space by means of the temperature control device.

3. The test chamber according to claim 1 or 2,
**characterized in that**
a temperature ranging from > +60 °C to+180 °C in temperature can be reduced within the test space by means of the temperature control device.

4. The test chamber according to any one of the preceding claims,
**characterized in that**
the refrigerant comprises a relative CO₂ equivalent, which is defined as a Global Warming Potential according to the fifth Assessment Report of the Intergovernmental Panel on Climate Change (IPCC), chapter 8 of the Assessment Report, of < 2500, preferably < 500, particularly preferably < 100, based on 20 years, said refrigerant not being flammable.

5. The test chamber according to any one of the preceding claims, **characterized in that**
the heat transmitter (45) is arranged in the test space.

6. The test chamber according to any one of the claims 1 to 4,
**characterized in that**
the heat transmitter (45) forms a cascading heat transmitter for another cooling cycle of the cooling device (56).

7. The test chamber according to claim 6,
**characterized in that**
the other cooling cycle comprises another refrigerant, another compressor, another heat transmitter, another condenser and another expanding element, said other heat transmitter being arranged in the test space, said other cooling cycle being coupled to the cascading heat transmitter of the cooling cycle (57) by means of the other condenser.

8. The test chamber according to any one of the preceding claims,
**characterized in that**
the temperature control device comprises a heating device having a heater and a heating heat transmitter in the test space.

9. The test chamber according to any one of the preceding claims,
**characterized in that**
the condenser (63) is realized having an air cooler or water cooler or a different cooling liquid.

10. The test chamber according to any one of the preceding claims,
**characterized in that**
the internal heat transmitter (64) is coupled to an adjustable external supplementary refrigeration of the cooling cycle.

11. The test chamber according to claim 10,
**characterized in that**
the adjustable external supplementary refrigeration is realized as a resupply of a freezing stage of the cooling device (56) or as an external cooling water pipe, said resupply or cooling water pipe being connected to the internal heat transmitter (64).

12. The test chamber according to claim 10,
**characterized in that**
the adjustable external supplementary refrigeration is realized as a Peltier element or a heating tube.

13. The test chamber according to any one of the preceding claims,
**characterized in that**
a second bypass (35) having at least a third expanding element (38) is formed in the cooling cycle (57), said second bypass bridging the expanding element (71) downstream of the internal heat transmitter and upstream of the condenser (63) in flow direction, the refrigerant being able to dosed via the third expanding element such that a suction gas temperature and/or a suction gas pressure of the refrigerant can be adjusted on the low-pressure side (66) of the cooling cycle upstream of the compressor (62).

14. The test chamber according to any one of the preceding claims,
**characterized in that**
the internal heat transmitter (64) is realized as an undercooling section or a heat exchanger (46), in particular a plate heat exchanger.

15. The test chamber according to any one of the preceding claims,
**characterized in that**
the expanding elements (28, 38, 49, 59, 71) each comprise a throttle (33, 36, 60) and a magnetic valve (34, 37, 61), a refrigerant being able to be dosed via the throttle and the magnetic valve.

16. The test chamber according to claim 15,
**characterized in that**
the temperature control device comprises a control device having at least one pressure sensor (67) and/or at least one temperature sensor in the cooling cycle (57), the magnetic valve (34, 37, 61) being able to be actuated by means of the control device in dependence of a measured temperature or pressure.

## Revendications

1. Chambre d'essai pour le conditionnement de l'air, comprenant une salle d'essai isolée contre la température et contre un environnement pour recevoir des matériaux d'essai et un dispositif de régulation de température pour contrôler la température de la salle d'essai, le dispositif de régulation de température comprenant un dispositif de refroidissement (56) ayant un circuit de refroidissement (57) ayant un agent réfrigérant, un échangeur de chaleur (45), un compresseur (62), un condensateur (63) et un élément d'expansion (71), une température variant de -30 °C à +180 °C en température pouvant être réalisée dans la salle d'essai au moyen du dispositif de régulation de température, le circuit de refroidissement comprenant un échangeur de chaleur (64) intérieur, l'échangeur de chaleur intérieur étant relié à un côté de haute pression (65) du circuit de refroidissement en amont de l'élément d'expansion et en aval du condensateur dans un sens d'écoulement, l'échangeur de chaleur intérieur étant relié à un côté de base pression (66) du circuit de refroidissement en amont du compresseur et en aval de l'échangeur de chaleur dans un sens d'écoulement, l'agent réfrigérant pouvant être refroidi au moyen de l'échangeur de chaleur intérieur, l'échangeur de chaleur intérieur étant couplé avec un refroidissement intérieur supplémentaire ajustable (25) du dispositif de refroidissement, un premier bypass (48) ayant au moins un deuxième élément d'expansion (49) ajustable étant réalisé dans le circuit de refroidissement, le premier bypass étant relié au circuit de refroidissement en amont de l'échangeur de chaleur intérieur et en aval du condensateur dans un sens d'écoulement, le premier bypass étant réalisé comme refroidissement intérieur supplémentaire ajustable, un côté de basse pression (50) de l'échangeur de chaleur intérieur étant relié au premier bypass en aval du deuxième élément d'expansion ajustable dans un sens d'écoulement, l'agent réfrigérant pouvant être alimenté à l'échangeur de chaleur intérieur du deuxième élément d'expansion ajustable, l'agent réfrigérant pouvant être alimenté au compresseur du côté de basse pression de l'échangeur de chaleur intérieur, un outre bypass (58) ayant au moins un outre élément d'expansion (59) étant réalisé dans le circuit de refroidissement, l'outre bypass reliant le côté de haute pression avec le côté de basse pression en amont de l'échangeur de chaleur intérieur et en aval condensateur dans un sens d'écoulement de telle manière qu'une température de gaz purifié et/ou une pression de gaz purifié de l'agent réfrigérant peut être ajustée(s) sur le côté de basse pression du circuit de refroidissement en amont du compresseur et/ou de telle manière qu'une différence de pression entre le côté de haute pression et le côté de basse pression du circuit de refroidissement peut être compensée,.

2. Chambre d'essai selon la revendication 1,
**caractérisé en ce qu'**
une température variant de -50 °C à +180 °C, de préférence de -80 °C à +180 °C, en température, peut être réalisé dans la salle d'essai au moyen du dispositif de régulation de température.

3. Chambre d'essai selon la revendication 1 ou 2,
**caractérisé en ce qu'**
une température variant de > +60 °C à +180 °C en température peut être réduite dans la salle d'essai au moyen du dispositif de régulation de température.

4. Chambre d'essai selon l'une quelconque des revendications,
**caractérisé en ce que**
l'agent réfrigérant comprend un relative CO₂ équivalent, qui est définie comme potentiel de réchauffement planétaire selon le cinquième Rapport d'évaluation du Groupe d'experts intergouvernemental sur l'évolution du climat (GIEC), chapitre 8 du Rapport d'évaluation, de < 2500, de préférence < 500, de préférence particulier < 100, sur la base de 20 ans, l'agent réfrigérant étant incombustible.

5. Chambre d'essai selon l'une quelconque des revendications,
**caractérisé en ce que**
l'échangeur de chaleur (45) est disposé dans la salle d'essai.

6. Chambre d'essai selon l'une quelconque des revendications 1 à 4,
**caractérisé en ce que**
l'échangeur de chaleur (45) forme échangeur de chaleur en cascade pour un outre circuit de refroidissement du dispositif de refroidissement (56).

7. Chambre d'essai selon la revendication 6,
**caractérisé en ce que**
l'outre circuit de refroidissement comprend un outre agent réfrigérant, un outre compresseur, un outre échangeur de chaleur, un outre condensateur et un outre élément d'expansion, l'outre échangeur de chaleur étant disposé dans la salle d'essai, l'outre circuit de refroidissement étant relié à l'échangeur de chaleur en cascade du circuit de refroidissement (57) au moyen de l'outre condensateur.

8. Chambre d'essai selon l'une quelconque des revendications,
**caractérisé en ce que**
le dispositif de régulation de température comprend un comprises a dispositif de chauffage ayant un chauffage et un échangeur de chaleur thermique dans la salle d'essai.

9. Chambre d'essai selon l'une quelconque des revendications,
**caractérisé en ce que**
le condensateur (63) est réalisé ayant un refroidissement à air ou un refroidissement par eau ou un liquide réfrigérant différent.

10. Chambre d'essai selon l'une quelconque des revendications,
**caractérisé en ce que**
l'échangeur de chaleur (64) intérieur est couplé à un refroidissement supplémentaire extérieur ajustable du circuit de refroidissement.

11. Chambre d'essai selon la revendication 10,
**caractérisé en ce que**
le refroidissement supplémentaire extérieur ajustable est réalisé comme une réalimentation d'un niveau de surgélation du dispositif de refroidissement (56) ou comme une conduite d'eau de refroidissement, la réalimentation ou la conduite d'eau de refroidissement étant reliée à l'échangeur de chaleur intérieur (64).

12. Chambre d'essai selon la revendication 10,
**caractérisé en ce que**
le refroidissement supplémentaire extérieur ajustable est réalisé comme un élément à effet Peltier ou un tuyau de chaleur.

13. Chambre d'essai selon l'une quelconque des revendications,
**caractérisé en ce qu'**
un deuxième bypass (35) ayant au moins un troisième élément d'expansion (38) est formé dans le circuit de refroidissement (57), le deuxième bypassant l'élément d'expansion (71) en aval de l'échangeur de chaleur intérieur (64) et en amont du condensateur (63) en sens d'écoulement, de l'agent réfrigérant pouvant être dosé par le troisième élément d'expansion de telle manière qu'une température de gaz purifié et/ou une pression de gaz purifié de l'agent réfrigérant peut être ajustée(s) sur le côté de basse pression (66) du circuit de refroidissement en amont du compresseur (62).

14. Chambre d'essai selon l'une quelconque des revendications,
**caractérisé en ce que**
l'échangeur de chaleur intérieur (64) est réalisé comme un chemin de sous-refroidissement (46) ou un échangeur de chaleur, en particulier un échangeur de chaleur à plaques.

15. Chambre d'essai selon l'une quelconque des revendications,
**caractérisé en ce que**
l'élément d'expansion (28, 38, 49, 59, 71) comprend un élément d'étranglement (33, 36, 60) et une électrovanne (34, 37, 61), un agent réfrigérant pouvant être dosé par l'élément d'étranglement et l'électrovanne.

16. Chambre d'essai selon la revendication 15,
**caractérisé en ce que**
le dispositif de régulation de température comprend un dispositif de contrôle ayant au moins un capteur de pression (67) et/ou un capteur de température (68) dans le circuit de refroidissement (11), l'électrovanne (34, 47, 61) pouvant être effectuée au moyen du dispositif de contrôle en fonction d'une température mesurée ou une pression mesurée.
